# EUROPÄISCHE PATENTANMELDUNG

(11) **EP 1 211 273 A1**
(43) Veröffentlichungstag der Anmeldung: **05.06.2002**
(21) Anmeldenummer: 01124479.5
(22) Anmeldetag: 12.10.2001
(51) Int. Cl.: C08G 18/80

(54) **Vernetzer und wärmehärtende Lacke**

(30) Priorität: 04.12.2000 DE 10060327
(71) Anmelder: Degussa AG, 40474 Düsseldorf (DE)
(72) Erfinder: Lomölder, Rainer, Dr., 48153 Münster (DE); Plogmann, Friedrich, 44581 Castrop-Rauxel (DE); Speier, Peter, 45768 Marl (DE); Spyrou, Emmanouil, Dr., 45772 Marl (DE); Wenning, Andreas, Dr., 48301 Nottuln (DE)

(57) **Zusammenfassung**

Die vorliegende Erfindung betrifft neue Vernetzer und wärmehärtende Lacke, die zu verbesserten Eigenschaften, wie Kratzbeständigkeiten gehärteter Einbrennlacke führen oder eine gute Löslichkeit aufweisen.

## Beschreibung

Die vorliegende Erfindung betrifft neue Vernetzer und wärmehärtende Lacke, die zu verbesserten Eigenschaften, wie Kratzbeständigkeiten gehärteter Einbrennlacke führen oder eine gute Löslichkeit aufweisen.

Blockierte Polyisocyanate und ihre Verwendung in wärmehärtenden Einkomponenten (1K-) Polyurethansystemen sind bekannt. Sie verleihen Decklackierungen eine im Vergleich zu Aminoplastharz-vernetzenden Systemen signifikant verbesserte Beständigkeit gegen Umwelteinflüsse, insbes. sauren Regen. U.a. werden blockierte Polyisocyanate auch anteilig in Kombination mit Aminoplastharzen als Vernetzerkomponente in sogenannten "Hybridsystemen" eingesetzt. Blockierte Polyisocyanate besitzen ferner eine erhebliche Bedeutung im Bereich wärmehärtender Pulverlacke

Nachteilig bei Einbrennlackierungen auf Basis blockierter Polyisocyanate ist einerseits eine erhebliche Kratzempfindlichkeit der Lackierungen, bedeutsam in der Automobillackierung für die Waschstraßenbeständigkeit von Decklacken.

Ein weiterer Nachteil einiger blockierter Polyisocyanatharze ist ihre limitierte Löslichkeit in gängigen Lacklösemitteln, gekennzeichnet u.a. durch eine erhebliche Kristallisationsneigung.

Mit sek. Aminosilanen modifizierte Polyisocyanate sind bekannt. So werden Malein- oder Fumarsäureester-modifizierte Aminopropyltrialkoxysilane mit Isocyanaten zur Reaktion gebracht, um gegenüber Dichtungsmassen auf Basis reiner Isocyanat-Prepolymerer eine bessere Haftung bei geringerer CO₂-Entwicklung zu erzielen (EP-596360, US-P 6,005,047). Strukturell verwandte Addukte werden auch als Härterkomponente in wässrigen 2K-PUR-Lacken eingesetzt (EP-872499, 949284). In OZ 5655 ist die vorteilhafte Verwendung von Polyisocyanaten, die mit sek. Aminosilanen modifiziert sind, in nicht-wäßrigen, wärmehärtenden 2K-Lacken beschrieben. Als Vorteil dieser Systeme ist eine bessere Balance aus Säurebeständigkeit und Beständigkeit gegen mechanische Beanspruchung, wie z.B. Kratzbeständigkeit, beschrieben.

Allen Anmeldungen ist gemein, dass die zur Anwendung kommende Harzkomponente noch freie Isocyanatgruppen enthält, d. h. für wärmehärtende 1K-Systeme, wie sie üblicherweise in der Automobilindustrie eingesetzt werden, ungeeignet sind.

Aufgabe der vorliegenden Erfindung war es daher, mit neuartigen Vernetzern Einbrennlackierungen mit einem den PUR-Beschichtungen vergleichbaren Eigenschaftsniveau bei gleichzeitig signifikant höherer Kratzbeständigkeit zu erzielen. Dabei sollte entweder die Kratzbeständigkeit der Lackierung an sich, oder aber die Fähigkeit der Lackierung zur Rückbildung von mechanischen Beschädigungen, das sogenannte reflow-Verhalten, verbessert werden.

Ein weiteres Ziel der vorliegenden Erfindung betraf eine verbesserte Löslichkeit oder reduzierte Kristallisationsneigung der Vernetzer bei Verwendung bezüglich dieser Eigenschaft kritischer Blockierungsmittel.

Gegenstand der Erfindung sind Vernetzer für wärmehärtende Lacke aufgebaut aus den Ausgangskomponenten
A) mindestens ein aliphatisches und/oder cycloaliphatisches Polyisocyanat mit einer NCO-Funktionalität von 2-6,
B) mindestens ein sekundäres 3-Aminopropyltrialkoxysilan, wobei 1 bis 90 Mol-% der ursprünglich vorhandenen freien Isocyanatgruppen des Polyisocyanates umgesetzt sind,
C) mindestens ein Blockierungsmittel, wobei 10 bis 99 Mol-% der ursprünglich vorhandenen freien Isocyanatgruppen des Polyisocyanates umgesetzt sind,
   und die molaren Anteile der umgesetzten Isocyanatgruppen sich auf 100 % addieren.

Es war überraschend, dass die blockierten Derivate über eine signifikant bessere Löslichkeit bei Verwendung bezüglich dieser Eigenschaft kritischen Blockierungsmitteln verfügen als die unmodifizierten, reinen blockierten Polyisocyanate.

Das Polyisocyanat der Komponente A) basiert auf Hexamethylendiisocyanat (HDI), Isophorondiisocyanat (IPDI), Bis-(4-isocyanatocyclohexyl)methan, (H₁₂-MDI), Tetramethylxylylendiisocyanat (TMXDI), 1,3-Bis(isocyanatomethyl)cyclohexan (1,3-H-XDI), 2,2,4- und 2,4,4-Trimethyl-1,6-diisocyanatohexan (TMDI), 2-Methylpentendiisocyanat-1,5 (MPDI), Norbornyldiisocyanat (NBDI), Lysintriisocyanat (LTI) oder 4-Isocyanatomethyl-1,8-octamethylendiisocyanat (NTI) oder Gemischen dieser Diisocyanate und weist eine mittlere NCO-Funktionalität von 2,0-6,0 auf.

Im Falle einer Funktionalität von größer zwei werden vorzugsweise Polyisocyanate - allein oder in Mischungen - wie sie durch Trimerisierung, Dimerisierung, Urethan-, Biuret- oder Allophanatbildung hergestellt werden, sowie auch Abmischungen dieser mit Monomeren, verwendet. Derartige Polyisocyanate oder Polyisocyanat/Monomer-Gemische können gegebenenfalls mit Di- oder polyfünktionellen, H-aciden Komponenten wie z. B. Di- oder Polyolen und/oder Di- oder Polyaminen, zusätzlich kettenverlängert oder verzweigt werden.

Als Komponente B) werden sekundäre 3-Aminopropyltrialkoxysilane mit der allgemeinen Formel I

R-NH-(CH₂)₃-Si(OR¹)₃ (I)

wobei R eine Alkyl-, iso-Alkyl-, tert. Alkyl-, Cycloalkyl- oder Arylgruppe mit 1-10 Kohlenstoffatomen und R¹ unabhängig voneinander eine Alkyl- oder iso-Alkylgruppe mit 1-8 Kohlenstoffatomen bedeuten, eingesetzt.

Bevorzugte Verbindungen sind die folgenden:
n-Butyl-3-aminopropyltriethoxysilan, n-Butyl-3-aminopropyltri-i-propoxysilan, Methyl-3-aminopropyltriethoxysilan, Methyl-3-aminopropyltri-i-propoxysilan, Phenyl-3-aminopropyltriethoxysilan, Phenyl-3-aminopropyltrimethoxysilan, Phenyl-3-aminopropyltri-ipropoxysilan, Cyclohexyl-3-aminopropyltriethoxysilan, Cyclohexyl-3-aminopropyltrimethoxysilan, Cyclohexyl-3-aminopropyltri-i-propoxysilan.

In einer weiteren Ausführungsform kann R ebenfalls -(CH₂)₃-Si(OR¹)₃ bedeuten.

Ebenfalls geeignet sind sek. 3-Aminopropyltrialkoxysilane, wie sie durch Umsetzung von Aminopropyltrialkoxysilanen mit aktivierten Doppelbindungen ((Meth-)acrylsäureesteren, (Meth)-acrylsäurenitrilen, Fumarsäure- oder Maleinsäureestern im Sinne einer Pseudo-Michael-Addition erhalten werden. Entsprechende sek. 3-Aminopropyltrialkoxysilane und ihre Umsetzungsprodukte mit Isocyanaten sind z.B. in US-P 4,067,844, EP-A 0596360 oder EP-A 0816326 beschrieben.

Somit kann in der Formel I auch R ein Rest der allgemeinen Struktur

-CHR²-CR³R⁴H

bedeuten,
mit R² = -H, C1-C8-Alkyl, -CO₂R¹;
mit R³ = H, Methyl;
mit R⁴ = -CO₂R¹, -CN.

Als Blockierungsmittel C) sind in der Polyurethan-Technologie bekannte Blockierungsmittel wie Ketoxime, Aldoxime, 1,2,4-Triazole, auch in substituierter Form, Pyrazole, auch in substituierter Form, insbesondere 3,5-Dimethylpyrazol, Lactame, insbes. ε-Caprolactam, CHacide Blockierungsmittel aus der Gruppe der Malonsäureester oder Acetessigsäureester, Phenole, substituierten Phenole, sekundäre Amine, insbes. sterisch gehinderte Amine wie Diisopropylamin oder C1-C10-Monoalkoholen geeignet. Diese Blockierungsmittel können in reiner Form, aber auch als Gemische zur Herstellung der erfindungsgemässen silanmodifiziertenVernetzer eingesetzt werden. Bevorzugt werden Oxime, Caprolactam, 3,5-Dimethylpyrazol oder 1,2,4-Triazol und sek. Amine.

Die Herstellung der erfindungsgemässen Vernetzer erfolgt in der Regel durch Modifizierung von Polyisocyanaten. Weniger bevorzugt, jedoch auch im Sinne der vorliegenden Erfindung ist die Silanmodifizierung von monomeren Diisocyanaten mit anschließender Überführung in das Polyisocyanat und sukzessiver Blockierung.

Die Modifizierung der Polyisocyanate kann sukzessive in Form einer Silanisierung mit anschließender Blockierung aber auch als Blockierung mit anschließender Silanisierung vorgenommen werden. Weniger bevorzugt, jedoch im Sinne der Erfindung ist die Umsetzung von Polyisocyanat mit einem Gemisch aus Silan und Blockierungsmittel. Besonders bevorzugtes Verfahren ist es, zunächst das Polyisocyanat zu blockieren und anschließend zu silanisieren.

Die Herstellung kann im Lösemittel erfolgen, wobei diese bevorzugt nicht-protisch und wasserfrei sind. Lösemittelfreie Herstellverfahren sind bei entsprechender Viskositätslage der Produkte in einer Rührreaktorfahrweise geeignet, bei höherer Viskosität der Produkte bietet sich die kontinuierliche Herstellung im Reaktionsextruder an.

Die Herstellung der erfindungsgemäßen Vernetzer erfolgt im Temperaturbereich von 20 °C bis 200 °C, bevorzugt 20 bis 150 °C.

Zur gegebenenfalls notwendigen Beschleunigung der Reaktion können auch in der PUR-Technologie übliche Katalysatoren aus der Gruppe der Sn(II)-, Sn(IV), Zn(II)- Bi-Verbindungen oder tertiäre Amine oder Kombinationen aus Metallkatalysator und tert. Amin verwendet werden.

Die Produkte können in reiner Form flüssig oder fest anfallen und ggf. für Flüssiglackanwendungen in organischen Lösemitteln gelöst sein.

Die erfindungsgemäßen Vernetzer werden in wärmehärtenden Lacken verwendet. Diese setzen sich im wesentlichen aus Vernetzer- und Polyolkomponente, Additiven, ggf. Lösemitteln und organischen oder anorganischen Farbpigmenten, Füllstoffen oder Farbstoffen zusammen.

Gegenstand sind demnach auch wärmehärtende Lacke, im wesentlichen enthaltend mindestens eine Polyolkomponente und die erfindungsgemäßen Vernetzer.

Dabei kann das erfindungsgemäße silanmodifizierte blockierte Polyisocyanat die alleinige Vernetzerkomponente der Einbrennlackierung stellen oder in Kombination mit anderen Vernetzern für hydroxylhaltige Lackharze in wärmehärtende Beschichtungen z.B. aus den Gruppen der blockierten Polyisocyanate, der Amionoharze wie Melaminharze, Benzoguanaminharze, Glykolurilharze oder Harnstoffharze (J. Ott in: Stoye-Freitag, Lackharze, Carl-Hanser-Verlag, 1996, S. 104 ff.), oder auch aus der Gruppe der Triazincarbamate wie z.B. in US-P 5084541 beschrieben. Dabei stellt das silanmodifizierte blockierte Polyisocyanat 10 bis 100 Gew.-Teile der Vernetzer, bezogen auf nicht flüchtige Bestandteile.

Als zu vernetzende Poylolkomponenten sind (Meth-)acryl-Copolymerisate, Polyesterpolyole, urethan- und estergruppenhaltige Polyole, Polyetherpolyole und/oder Polycarbonatdiole geeignet.

Als hydroxylgruppenhaltige (Meth)acryl-Copolymerisate können Harze mit einer Monomerzusammensetzung, wie sie z.B. in WO 93/15849 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0-30, vorzugsweise 3-15 betragen. Das zahlenmittlere Molgewicht (ermittelt durch Gelpermeationschromatographie gegen einen Polystyrolstandard) des (Meth)acryl-Copolymerisates beträgt vorzugsweise 2000-20000 g/mol, die Glasübergangstemperatur beträgrt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70-250 mg KOH/g, besonders bevorzugt 90-190 mg KOH/g.

Erfindungsgemäß geeignete Polyesterpolyole sind Harze mit einer Monomerzusammensetzung aus Di- und Polycarbonsäuren und Di- und Polyolen, wie sie z. B. in Stoye/Freitag, Lackharze, C. Hanser Verlag, 1996, S. 49 oder auch in WO 93/15849 beschrieben sind. Als Polyesterpolyole können auch Polyadditionsprodukte von Caprolacton and niedermolekulare Di- und Triole, wie z.B. unter der Bezeichnung TONE (Union Carbide Corp.) oder CAPA (Solvay/Interox) erhältlich, eingesetzt werden. Das rechnerisch bestimmte zahlenmittlere Molgewicht beträgt vorzugsweise 500-5000 g/mol, besonders bevorzugt 800-3000 g/mol, die mittlere Funktionalität 2,0-4,0, bevorzugt 2,0-3,5.

Als erfindungsgemäß zu verwendende urethan- und estergruppenhaltige Polyole kommen prinzipiell solche zum Einsatz, wie sie in EP-140 186 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden. Das zahlenmittlere Molgewicht beträgt vorzugsweise 500-2000 g/mol, die mittlere Funktionalität 2,0-3,5.

Das Mischungsverhältnis von Vernetzer- und Polyolkomponente variiert zwischen 5:95 und 50:50, bezogen auf das Gewicht der nicht flüchtigen Bestandteile, je nach gewünschtem Eigenschaftsprofil der ausgehärteten Beschichtung.

Die erfindungsgemäßen Lacke können die in der Lacktechnologie bekannte Lösemittel, z. B. Ketone, Ester oder Aromaten und Hilfsstoffe wie Stabilisatioren, Lichtschutzmittel, Katalysatoren, Verlaufsmittel oder Rheologiehilfsmittel, wie z.B. sog. "sag control agents", Mikrogele oder pyrogenes Siliciumdioxid in typischen Konzentrationen, enthalten.

Als Katalysatoren kommen insbesondere solche in Betracht, die sich auf dem Gebiet der PUR-Technologie bewährt haben, wie z.B. organische Sn(IV)-, Sn(II)-, Zn-, Bi-Verbindungen oder tert. Amine (PUR-Katalysatoren) in Mengen von 0,1 - 2 Gew.-%.

Auch Sulfonsäure-basierende Katalysatoren in latenter Form als aminneutralisierte Komponente oder als kovalentes Addukt an Epoxid-haltige Verbindungen, wie sie insbesondere in der DE-OS 23 56 768 beschreiben sind in Mengen von 0,1 - 7 Gew.-%, sind geeignete Katalysatoren.

Besonders vorteilhaft werden Kombinationen aus PUR-Katalysatoren und blockierten, Sulfonsäure-basierenden Katalysatoren verwendet. Die Katalysatorkonzentrationen betragen dabei 0,01-0,5 Gew.-% PUR-Katalysator und 0,1-7 Gew.-% Sulfonsäure-basierender Katalysator, bezogen auf nicht flüchtige organische Bestandteile. Diese Ausführungsform ist eine besonders bevorzugte Variante der erfg. Beschichtungsmittel.

Falls erforderlich, können auch in der Lacktechnologie übliche anorganische oder organische Farb- und/oder Effektpigmente eingearbeitet werden.

Lacke auf Basis der erfindungsgemäßen Vernetzer können lösemittelhaltig, wäßrig, sog. wäßrige Pulver-Slurry-Systeme aber auch Pulverlacke darstellen.

Die Lacke auf Basis der erfindungsgemäßen Vernetzer können nach bekannten Verfahren wie Spritzen, Tauchen, Walzen oder Rakeln aufgetragen werden. Dabei kann das zu beschichtende Substrat bereits mit weiteren Lackschichten versehen sein.

Geeignet sind die Lacke auch für die Verwendung als Klarlack, wobei dieser im sogenannten Naß-in-Naß-Verfahren auf eine oder mehrere Basislackschicht(en) aufgetragen wird, und diese dann gemeinsam gehärtet werden.

Die Aushärtung der erfindungsgemäßen Lacke erfolgt im Temperaturbereich 110-250°C (Objekttemperatur).

Die Erfindung wird durch die folgenden Beispiele näher erläutert. Die Mengenangaben beziehen sich auf das Gewicht.

### Beispiel 1(Vergleich): Herstellung eines 1,2,4-Triazol-blockierten Polyisocyanates

728,3 Teile VESTANAT T 1890/100 (Polyisocyanat auf Basis IPDI) werden in 623,7 Teilen Solvesso 100 bei 40 °C gelöst, mit 207,3 g Triazol versetzt und 90 °C aufgeheizt. Nach 5 h Rührens bei 90 °C entsteht eine klare Lösung. Der freie NCO-Gehalt der Lösung ist auf 0,3% gesunken, d.h. nahezu vollständiger Umsatz der NCO-Gruppen erzielt. Nach ca. 12 h bei Umgebungstemperatur sind erhebliche Mengen eines weißen Feststoffs auskristallisiert. Auch durch Verdünnung mit Solvesso 100 auf 50%, 40% oder 30% Festkörperanteil konnte keine klare Lösung erhalten werden.

### Beispiel 2: Herstellung eines erfindungsgemässen Vernetzers unter Verwendung von 1,2,4-Triazol

485,6 Gew.-Teile Vestanat T 1890/100 (Degussa-Hüls AG) werden in 506 Gew.-Teile Sovesso 100 gelöst. Es wird mit 82,9 Gew.Teilen 1,2,4-Triazol und 0,38 Gew.Teilen DBTL versetzt, auf 90 °C erwärmt und 3h bei dieser Temperatur gerührt. Die klare Lösung wird auf 40 °C abgekühlt und mit innerhalb von 30 min mit 190,4 Gew.-Teilen Dynasylan 1189 versetzt. Nach 2 h Rühren bei 40 °C ist die Reaktion abgeschlossen, es wird kein weiterer Viskositätsanstieg beobachtet, der NCO-Gehalt beträgt < 0,1 Gew.-%. Die Lösung bleibt auch nach längerer Lagerung bei Raumtemperatur klar.
Viskosität: 9.960 mPa•s (23 °C)

Beispiel Nr. 2 zeigt im Gegensatz zum Vergleichsbeispiel Nr. 1, dass sich durch eine erfindungsgemäße Silanmodifizierung die Löslichkeit und Verträglichkeit von Vernetzerharzen signifikant verbessern läßt.

### Beispiel 3: Herstellung eines silanmodifizierten, 2-Butanonoxim-blockierten Polyisocyanates (erfindungsgemäß):

681,6 Tl. Desmodur N 3300 (Bayer AG, Isocyanurat des HDI) werden in 288,7 Tl. Solvesso 100 gelöst und bei 40 °C während 1 h unter Kühlung mit 184,7 T1 2-Butanonoxim versetzt. Nach einer weiteren Stunde ist der NCO-Gehalt auf 5,14 % gesunken, d.h. es ist vollständiger Umsatz des Oxims erfolgt. Es wird mit 111,1 Tl. Solvesso 100 verdünnt und 333,2 Tl. DYNASYLAN 1189 werden kontinuierlich während 30 min. zudosiert. Nach 1 h ist die Reaktion vervollständigt. Der Silanisierungsgrad beträgt 40 mol-% der NCO-Gruppen des eingesetzten Polyisocyanates.
Kenndaten: Nichtflüchtige Anteile: 75%; Viskosität (25 °C): 2700 mPas; NCO-Gehalt: < 0,1%

### Beispiele 4-8: Zusammensetzung von Einbrennlacken aus Basis erfindungsgemäßer Vemetzer (Beispiele 5-7) und Vergleichsbeispiele 4 und 8:

Spritzlacke werden durch Mischen der Komponenten gem. Tab. 1 bis zur vollständigen Homogenisierung hergestellt. Die Viskosität betrug, bestimmt als Auslaufzeit im DIN-4-Becher bei 23 °C, ca. 20 Sekunden.

**Tabelle 1:**

| Zusammensetzung von Einbrennlacken | | | | | |
|---|---|---|---|---|---|
| | Beispiel | | | | |
| | Nr. 4 | Nr. 5 | Nr. 6 | Nr. 7 | Nr. 8 |
| Desmodur BL 3175 (Bayer AG, D) | 26,2 | | | | |
| Polyisocyanat gemäß Beispiel 2 | | | | 11,5 | |
| Polyisocyanat gemäß Beispiel 3 | | 34,2 | 24,3 | | |
| Macrynal SM 510 N (Vianova Resins, A) | 43,1 | 28,0 | 33,2 | | |
| Setalux C 1757 (Akzo Resins) | | | | 40,3 | 51,3 |
| Setamin US 138 BB70 (Akzo Resins) | | | | 12,1 | 22,0 |
| DBTL (10%-ig) | 4,6 | 4,2 | 3,8 | 4,3 | |
| Dynapol Katalysaror 1203 (Degussa-Hüls AG) | | | | 2,2 | 1,5 |
| Butylacetat | 9,5 | 14,0 | 16,5 | 10,1 | 5,1 |
| Xylol | 9,6 | 13,9 | 16,5 | 10,9 | 9,7 |
| Tinuvin 292 (CIBA) | 0,5 | 0,5 | 0,5 | 0,6 | 0,5 |
| Tinuvin 1130 (CIBA) | 0,7 | 0,7 | 0,7 | 0,8 | 0,7 |
| Butylglycolacetat | | | | 2,0 | 2,6 |
| Butoxyl | | | | | 1,5 |
| Baysilon OL 17 (10 %ig) | | | | | 5,1 |
| BYK Spezial | 3,6 | 2,5 | 2,5 | | |
| BYK 333 (BYK-Chemie, D) (10%ig) | | | | 2,6 | |
| BYK 331 (BYK-Chemie, D) (10%ig) | 2,2 | 2,0 | 2,0 | | |
| BYK OK (BYK-Chemie, D) | | | | 2,6 | |

Zur Prüfung der Kratzbeständigkeit wurden die Klarlacke in einem Naß-in-Naß-Verfahren auf einen schwarzen Basecoat (Permacron, Fa. Spies Hecker, Spritzauftrag, 10 min Ablüftzeit bei Umgebungstemperatur) im Spritzauftrag appliziert. Die Aushärtung erfolgte nach 5 min Ablüftzeit 25 min 140 °C. Die Trockenfilmschichtdicke der Klarlacke betrug ca. 35 µm. Nach 14 d Lagerung bei Umgebungstemperatur erfolgte die Bestimmung der Kratzbeständigkeit. Zur Beurteilung der Säurebeständigkeit wurden Klarlacke gem. obigen Verfahrens auf einen silber-metallic Basecoat (STANDOX VWL 97A, Diamantsilber der Fa. Herberts) auf sog. Gradientenofenbleche (BYK-Gardner) appliziert und ausgehärtet.

Mechanische Eigenschaften und allgemeine Beständigkeiten wurden von einschichtigen Klarlacken, appliziert auf phosphatierte Stahlbleche (Bonder 26) und gehärtet bei 25 min 140 °C, erfaßt.

### Prüfung auf Kratzbeständigkeit:

Ein 45 mm x 20 mm Nylongewebe, Maschenweite 31 µm, wird mit einem 2 Kg-Gewicht beschwert, auf die Prüfplatte, die ihrerseits auf einem Schlitten fixiert ist, aufgelegt und arretiert. Nach Auftrag von 1ml einer aufgerührten, 0,25%-igen Waschmittellösung (Persil) unmittelbar vor der Prüffläche wird die Prüfplatte mit einer maximalen Auslenkung von jeweils ca. 3,5 cm oszilliert. Nach 80 Doppelhüben (1 s⁻¹) wird die verbliebene Waschflüssigkeit mit Leitungswasser abgespült und mit Druckluft getrocknet. Jeweils vor und nach der Prüfung werden Glanzmessungen (20°-Winkel) vorgenommen.

Erholung (reflow) unter Temperatureinfluß: Die geschädigte Prüfplatte wird 2 h bei 60°C in einem Umluftofen gelagert und anschließend erneut der Glanz der Beschichtung gemessen.

### Prüfung auf Säurebeständigkeit:

Auf die Prüfbleche werden mittels einer Pipette Tropfen (ca. 0,25 ml) einer 20%-igen Schwefelsäurelösung im Abstand von 2 cm aufgebracht. In einem Temperaturgradientenofen (BYK-Gardner) werden sie 30 min einem Temperaturgradienten in Längsrichtung des Bleches von 35-80 °C unterworfen. Anschließend werden mit Wasser Reste der Säure abgewaschen und nach 24 h einer visuellen Prüfung unterzogen. Zur Beurteilung der Beständigkeit werden der Bereich (Temperatur) eines ersten sichtbaren Angriffs des Klarlacks sowie der einer Zerstörung des Basecoats in °C angegeben. Je höher die jeweilige Temperatur, desto höher ist die Beständigkeit des Klarlackes zu bewerten.

**Tabelle 2:**

| Mechanische Kenndaten, Säurebeständigkeit, Kratzbeständigkeit gehärteter Einbrennlacke | | | | | |
|---|---|---|---|---|---|
| | Beispiel | | | | |
| | Nr. 4 | Nr. 5 | Nr. 6 | Nr. 7 | Nr. 8 |
| Schichtdicke (µm) | 30 | 30 | 33 | 35 | 28 |
| Härte, König (s) | 192 | 195 | 196 | 167 | 154 |
| Erichsen-Tiefung (mm) | 8,5 | 7,0 | 7,5 | 7,0 | 5,5 |
| Kugelschlag, direkt (inch*lbs) | > 80 | >80 | > 80 | 40 | 40 |
| Superbenzin-beständigkeit | Sehr gut | Sehr gut | Sehr gut | Sehr gut | Sehr gut |
| MEK-Wischer- beständigkeit (Doppelhübe) | > 150 | > 150 | > 150 | > 150 | > 150 |
| | | | | | |
| Säurebeständigkeit: | | | | | |
| Klarlackangriff bei °C | 55 | 45 | 49 | 48 | 36 |
| Zerstörung Basecoat bei °C | 63 | 57 | 53 | 67 | 46 |
| | | | | | |
| Kratzbeständigkeit: | | | | | |
| Ausgangsglanz, 20° | 84,6 | 79,1 | 80,7 | 84,8 | 83,6 |
| Glanzdifferenz nach Test, 20° | 33,5 | 27,9 | 35,3 | 38,5 | 15,0 |
| Glanzdifferenz zu Ausgangsgl. nach reflow (60°C), 20° | 20,8 | 1,5 | 2,3 | 12,8 | 7,1 |

Die Beispiele 5 und 6 zeigen gegenüber dem Vergleichsbeispiel (Nr. 4) bei nahezu identischem mechanischem Eigenschaftsprofil und vergleichbarer Säurebeständigkeit ein signifikant verbessertes reflow-Verhalten. Gegenüber dem Referenzbeispiel einer reinen Melaminharzvernetzung (Beispiel Nr. 8) zeigt der Einsatz des erfindungsgemässen, silanisierten und 1,2,4-Triazol-blockierten Vernetzers Nr. 2 bei ähnlichen Glanzwerten nach reflow-Prüfung eine signifikant verbesserte Säurebeständigkeit, sowohl bzgl. Klarlack- und Basecoat-Angriff.

## Patentansprüche

1. Vernetzer für wärmehärtende Lacke aufgebaut aus den Ausgangskomponenten
A) mindestens ein aliphatisches und/oder cycloaliphatisches Polyisocyanat mit einer NCO-Funktionalität von 2-6,
B) mindestens ein sekundäres 3-Aminopropyltrialkoxysilan, wobei 1 bis 90 Mol-% der ursprünglich vorhandenen freien Isocyanatgruppen des Polyisocyanates umgesetzt sind,
C) mindestens ein Blockierungsmittel, wobei 10 bis 99 Mol-% der ursprünglich vorhandenen freien Isocyanatgruppen des Polyisocyanates umgesetzt sind,
und die molaren Anteile der umgesetzten Isocyanatgruppen sich auf 100 % addieren.

2. Vernetzer für wärmehärtende Lacke nach Anspruch 1,
**dadurch gekennzeichnet,**
**dass** das Polyisocyanat A) auf den folgenden Diisocyanaten basiert:
HDI, IPDI, H₁₂-MDI, TMXDI, 1.3-H-XDI, TMDI, MPDI, NBDI, LTI und/oder NTI.

3. Vernetzer für wärmehärtende Lacke nach Anspruch 2,
**dadurch gekennzeichnet,**
**dass** die Komponente A) Polyisocyanate, erhalten durch Trimerisierung, Dimerisierung, Urethan-, Biuret- oder Allophanatbildung, allein oder in Mischungen enthält.

4. Vernetzer für wärmehärtende Lacke nach mindestens einem der Ansprüche 1 bis 3,
**dadurch gekennzeichnet,**
**dass** die Komponente A) Mischungen von Polyisocyanaten und monomeren Diisocyanaten enthält.

5. Vernetzer für wärmehärtende Lacke nach mindestens einem der Ansprüche 1 bis 4,
**dadurch gekennzeichnet,**
**dass** die Polyisocyanate zusätzlich kettenverlängert oder verzweigt sind.

6. Vernetzer für wärmehärtende Lacke nach mindestens einem der Ansprüche 1 bis 5,
**dadurch gekennzeichnet,**
**dass** als Komponente B) sekundäre 3-Aminopropyltrialkoxisilane der allgemeinen Formel I
R-NH-(CH₂)₃-Si(OR¹)₃ (I)
wobei R eine Alkyl-, iso-Alkyl-, tert. Alkyl-, Cycloalkyl- oder Arylgruppe mit 1-10 Kohlenstoffatomen und R¹ unabhängig voneinander eine Alkyl- oder iso-Alkylgruppe mit 1-8 Kohlenstoffatomen bedeuten, eingesetzt werden.

7. Vernetzer für wärmehärtende Lacke nach Anspruch 6,
**dadurch gekennzeichnet,**
**dass** die folgenden Silane allein oder in Mischungen eingesetzt werden:
n-Butyl-3-aminopropyltriethoxysilan, n-Butyl-3-aminopropyltri-i-propoxysilan, Methyl-3-aminopropyltriethoxysilan, Methyl-3-aminopropyltri-i-propoxysilan, Phenyl-3-aminopropyltriethoxysilan, Phenyl-3-aminopropyltrimethoxysilan, Phenyl-3-aminopropyltri-ipropoxysilan, Cyclohexyl-3-aminopropyltriethoxysilan, Cyclohexyl-3-aminopropyltrimethoxysilan, Cyclohexyl-3-aminopropyltri-i-propoxysilan.

8. Vernetzer für wärmehärtende Lacke nach Anspruch 6,
**dadurch gekennzeichnet,**
**dass** R gleich -(CH₂)₃-Si(OR¹)₃ bedeutet.

9. Vernetzer für wärmehärtende Lacke nach Anspruche 6,
**dadurch gekennzeichnet,**
**dass** R ein Rest der allgemeinen Struktur
-CHR²-CR³R⁴H
bedeutet,
mit R² = -H, C1-C8-Alkyl, -CO₂R¹;
mit R³ = H, Methyl;
mit R⁴ = -CO₂R¹, -CN.

10. Vernetzer für wärmehärtende Lacke nach mindestens einem der Ansprüche 1 bis 9,
**dadurch gekennzeichnet,**
**dass** als Blockierungsmittel C) Ketoxime, Aldoxime, 1,2,4-Triazole, auch in substituierter Form, Pyrazole, auch in substituierter Form, 3,5-Dimethylpyrazol, ε-Caprolactam, Malonsäureester oder Acetessigsäureester, Phenol, substituierten Phenole, sekundäre Amine, C1-C10-Monoalkohole oder Gemische dieser Blockierungsmittel eingesetzt werden.

11. Wärmehärtende Lacke, im wesentlichen enthaltend mindestens eine Polyolkomponente und Vernetzer nach mindestens einem der Ansprüche 1 bis 10.

12. Wärmehärtende Lacke nach Anspruch 11,
**dadurch gekennzeichnet,**
**dass** als Polyolkomponente hydroxylgruppenhaltige Harze, ausgewählt aus hydroxylgruppenhaltigen (Meth-)acryl-Copolymerisaten, gesättigten Polyesterpolyolen, Polycarbonatdiolen, Polyetherpolyolen oder urethan- und estergruppenhaltigen Polyolen, oder Mischungen enthalten sind.

13. Wärmehärtende Lacke nach Anspruch 12,
**dadurch gekennzeichnet,**
**dass** als hydroxylgruppenhaltiges Harz (Meth-)acryl-Copolymerisate mit einem zahlenmittleren Molgewicht von 2.000 bis 20.000 g/mol, mit einer Glasübergangstemperatur von - 40 bis + 60 °C und einem Hydroxylgehalt von 30 bis 250 mg KOH/g, bezogen auf die nicht flüchtigen Bestandteile, enthalten sind.

14. Wärmehärtende Lacke nach Anspruch 12,
**dadurch gekennzeichnet,**
**dass** als hydroxylgruppenhaltiges Harz Polyesterpolyole, mit einer mittleren Funktionalität von 2,0 bis 4,0 und einem zahlenmittleren Molgewicht von 500 bis 10.000 g/mol, enthalten sind.

15. Wärmehärtende Lacke nach mindestens einem der Ansprüche 11 bis 14,
**dadurch gekennzeichnet,**
**dass** das Verhältnis Polyolkomponente zu Vernetzer, bezogen auf die nichtflüchtigen Anteile, 95:5 bis 50:50 beträgt.

16. Wärmehärtende Lacke nach mindestens einem der Ansprüche 11 bis 15,
**dadurch gekennzeichnet,**
**dass** Hilfsstoffe enthalten sind.

17. Wärmehärtende Lacke nach mindestens einem der Ansprüche 1 bis 16,
**dadurch gekennzeichnet,**
**dass** als Hilfsstoffe Stabilisatoren, Lichtschutzmittel, Katalysatoren, Verlaufsmittel, Rheologiehilfsmittel, Mikrogele, Pigmente und/oder pyrogenes Siliciumdioxid enthalten sind.

18. Wärmehärtende Lacke nach mindestens einem der Ansprüche 11 bis 17,
**dadurch gekennzeichnet,**
**dass** als Katalysatoren organische Sn(IV)-, Sn(II)-, Zn-, Bi-Verbindungen oder tert. Amine (PUR-Katalysatoren) in Mengen von 0,1 - 2 Gew.-% enthalten sind.

19. Wärmehärtende Lacke nach mindestens einem der Ansprüche 11 bis 17,
**dadurch gekennzeichnet,**
**dass** als Katalysatoren Sulfonsäure-basierende Katalysatoren in latenter Form als amineutralisierte Komponente oder als kovalentes Addukt an Epoxid-haltige Verbindungen, in Mengen von 0,1 - 7 Gew.-% enthalten sind.

20. Wärmehärtende Lacke nach mindestens einem der Ansprüche 11 bis 17,
**dadurch gekennzeichnet,**
**dass** als Katalysatoren 0,1-2 Gew.-% PUR-Katalysator und 0,1-7 Gew.-% Sulfonsäure-basierender Katalysator, bezogen auf nicht flüchtige organische Bestandteile, enthalten sind.

21. Wärmehärtende Lacke nach mindestens einem der Ansprüche 11 bis 20,
**dadurch gekennzeichnet,**
**dass** Lösemittel enthalten sind.
